# EUROPEAN PATENT SPECIFICATION

(11) **EP 3 152 888 B1**
(45) Date of publication and mention of the grant of the patent: **18.11.2020**
(21) Application number: 14729878.0
(22) Date of filing: 04.06.2014
(51) Int. Cl.: H04M 1/60, H04W 4/80, H04M 1/725, H04M 1/247, H04R 25/00

(54) **AUDIO DEVICE NETWORK AND AUDIO DEVICE PAIRING METHOD**
AUDIOVORRICHTUNGSNETZWERK UND AUDIOVORRICHTUNGSPAARUNGSVERFAHREN
RÉSEAU DE DISPOSITIFS AUDIO ET PROCÉDÉ D'APPARIEMENT DE DISPOSITIFS AUDIO

(43) Date of publication of application: 12.04.2017
(73) Proprietor: Sonova AG, 8712 Stäfa (CH)
(72) Inventor: GEHRING, Stephan, CH-8713 Uerikon (CH); KURMANN, Reto, CH-8712 Staefa (CH); HASLER, Ivo, CH-8404 Winterthur (CH)
(74) Representative: Schwan Schorer & Partner mbB
(86) International application number: PCT/EP2014/061580
(87) International publication number: WO 2015/185123

(56) References cited:
- EP-A1- 2 605 492
- US-A1- 2009 154 739
- US-A1- 2013 316 649

## Description

The invention relates to a method of establishing a wireless network comprising a first and a second hearing assistance device and an external device.

In general, establishing a communication network requires two steps: first, the devices have to be paired, and then the devices have to be connected. The pairing procedure typically involves the exchange of a device identification and information related to security, e.g. information for deriving a shared encryption key; the connection procedure involves the exchange of information concerning network protocol and timing (i.e. in order to synchronize to a network clock), frequency hopping sequence, etc. From a network protocol's perspective, two devices, such as hearing assistance devices, are considered as separate devices, so that, in order for the two devices to communicate with a third device, the two devices need to be individually paired with the third device, thereby requiring two separate pairing interactions.

From a user's perspective, pairing interactions are cumbersome and therefore should be avoided as far as possible.

EP 1 701 567 A1 relates to a communication method wherein a first Bluetooth device which is paired to a second Bluetooth device uses the connectivity of the second device to a network for accessing the network.

WO 03/056746 A1 relates to a communication system comprising a plurality of devices, wherein a group encryption key is established and distributed among the devices in order to simplify pairing of the devices.

US 7,813,762 B1 relates to a wireless communication adapter which is connected to a direct audio input of a BTE hearing aid in order to connect the hearing aid with a remote device. The adapter uses a Bluetooth standard and is provided with a multi-pairing capability.

US 2009/0154739 A1 relates to multiple wireless earbuds that provide audio signals to a user from a common audio source. A first wireless earbud receives a wireless audio signal directly from an audio source and relays the audio signal to a second wireless earbud via a binaural wireless connection between the earbuds; both wireless links may use a Bluetooth protocol.

It is an object of the invention to provide for a method of establishing a wireless network comprising a first and a second hearing assistance device and an external device, wherein pairing can be achieved in a particularly simple manner. It is a further object to provide for a corresponding hearing assistance system.

According to the invention, these objects are achieved by methods as defined in claims 1 and 3 and systems as defined in claims 8 and 9, respectively Preferred embodiments are defined in the dependent claims.

The invention is beneficial in that, using one of the two hearing assistance devices for assisting pairing of the other hearing assistance device with the external device, the pairing procedure can be simplified from a user's perspective by reducing the user's interactions required to achieve pairing of the two hearing assistance devices with the external device. Preferably, the network uses a Bluetooth protocol.

Preferred embodiments of the invention are defined in the dependent claims. Hereinafter, examples of the invention will be illustrated by reference to the attached drawings, wherein:
- Fig. 1: is a schematic block diagram of an example of a hearing assistance system according to the invention;
- Fig. 2: is a sequence diagram of an example of a pairing procedure of a hearing assistance system like that shown in Fig. 1;
- Fig. 3: is a schematic illustration of the procedure of Fig. 2;
- Figs. 4 and 5: are representations like Figs. 2 and 3, respectively, with another example of a pairing procedure being illustrated; and
- Figs. 6 and 7: are representations like Figs. 2 and 3, with an example of a pairing procedure being illustrated which does not form part of the invention.

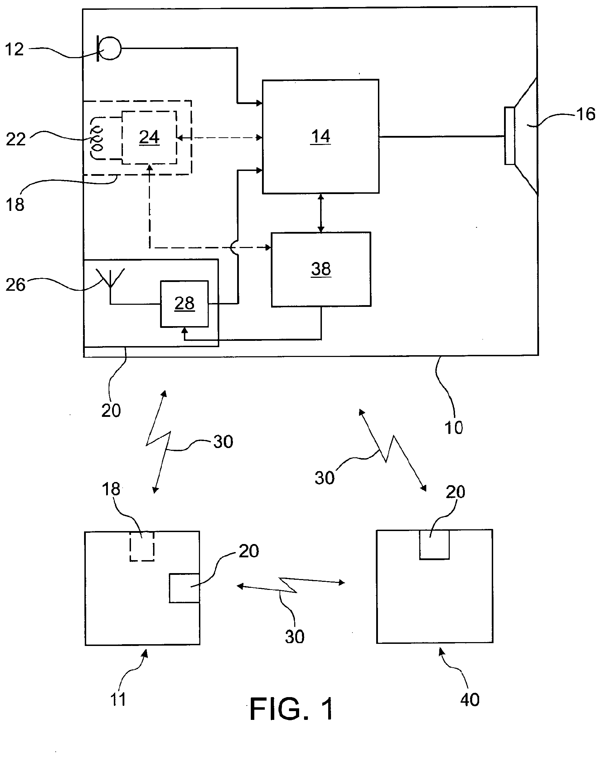

Fig. 1 is a block diagram of an example of a system comprising a first hearing assistance device 10 to be worn at one ear of a user, a second hearing assistance device 11 to be worn at the other ear of the user and an external device 40.

In the example of Fig. 1, the hearing assistance devices 10, 11 are hearing aids comprising a microphone arrangement 12 for capturing audio signals from ambient sound, an audio signal processing unit 14 for processing the captured audio signals and an electro-acoustic output transducer (loudspeaker) 16 for stimulation the user's hearing according to the processed audio signals (these elements are shown in Fig. 1 only for the hearing aid 10).

The hearing aids 10, 11 comprise a wireless interface 20 comprising an antenna 26 and a transceiver 28.

The interface 20 is provided for enabling wireless data exchange between the first hearing aid 10 and the second hearing aid 11 via a wireless link 30 which serves to realize a binaural hearing assistance system, allowing the hearing aids 10, 11 to exchange audio signals and/ or control data and status data, such as the present settings of the hearing aids 10, 11.

The interface 20 is also provided for data exchange via a wireless link 30 from an external device 40, for example for receiving an audio data stream from an external device 40 acting as an audio source, comprising a wireless interface 20 .

For example, the interface 20 may be adapted to operate in a frequency range of 0.38 GHz to 5.825 GHz, preferably at frequencies around 2.4 GHz in the ISM band. Typically, the interface 20 is a Bluetooth interface; alternatively, it may use another standard protocol or proprietary protocol.

Preferably, the external data stream is an audio data stream which may be mono stream or a stereo stream; alternatively or in addition the external data stream may include text data.

The hearing aids 10, 11 also comprise a controller 38 for controlling operation of the hearing aids 10, 11, with the controller 38 acting on the signal processing unit 14 and the transceiver 28, and a memory 36 for storing data required for operation of the hearing aid 10, 11 and data required for operation of the interface 20, such as pairing / network data.

While the binaural link between the hearing devices 10, 11 may be realized by the wireless interfaces 20 which are also used for the connection with the external device 40, the binaural link alternatively could be realized by a separate interface using a different technology, such as an inductive link or a proprietary protocol. An example is shown in dashed lines in Fig. 1, according to which the hearing aids 10, 11 in addition to the interface 20 comprise a second interface 18, including an antenna 22 and a transceiver 24, which is used for realizing the wireless data exchange between the first hearing aid 10 and the second hearing aid 11 via the wireless link 30 - rather than using the interface 20 to this end. For example, the second interface 18 may be designed to form part of a hearing instrument body area network (HIBAN) using an inductive link which may operate, for example, in a frequency range of 6.765 MHz to 13.567 MHz, such as at 10.6 MHz. However, rather than being implemented as an inductive link, the binaural wireless link 30 may be a far-field link requiring, such as a proprietary or standard digitally modulated link operating in the 2.4 GHz ISM band.

The first and second hearing assistance devices typically are ear level devices and preferably form a binaural hearing system. For example, the hearing assistance devices may be hearing aids, such as BTE (behind the ear), ITE (in the ear) or CIC (completely in the channel) hearing aids. Alternatively, the hearing assistance devices may be wireless headphones.

In general, the hearing assistance devices are not restricted to ear-level or body-worn devices: For example, according to one embodiment, the hearing assistance devices may be two or more wireless (room) loudspeaker devices.

The external device typically is an audio source (although it is also could be an audio sink) for providing an audio stream to the hearing assistance devices. For example, the external device may be an audio communication device, such as a mobile phone, a landline phone or an internet phone device, or a TV-set, a personal computer, a tablet computer, a radio device or a media player. Alternatively, the external device may be an accessory device of a hearing assistance device, such as a wireless microphone, a hearing assistance device remote control or an audio streamer device.

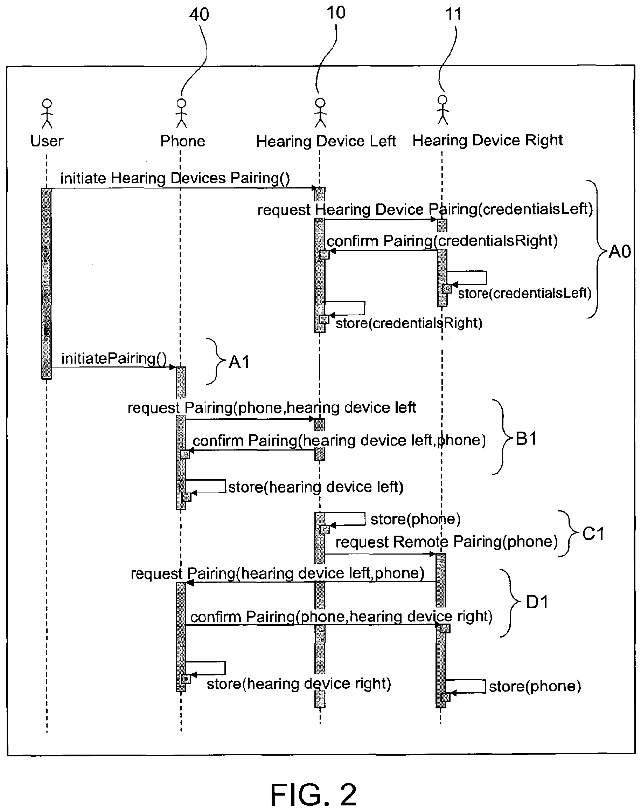

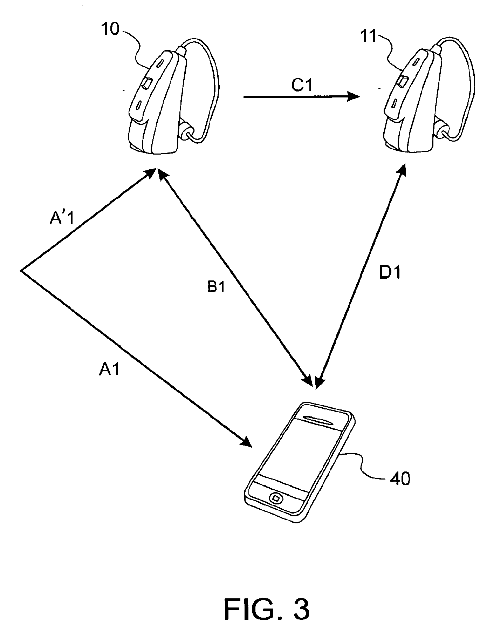

An example of a first embodiment of a pairing procedure for a hearing assistance system like that of Fig. 1 is illustrated in Figs. 2 and 3, with Fig. 2 showing a sequence diagram and with Fig. 3 schematically illustrating the sequence steps of Fig. 2. According to the example of Fig. 2, the left ear hearing device 10 and the right ear hearing device 11 are paired upon interaction by the user of the hearing devices 10, 11 (pairing the two hearing assistance devices serves to introduce the devices to each other so that they know each other's identity and to enable the devices to securely exchange messages, if so desired). For example, the user may interact with the left ear hearing device 10 in order to cause the left ear hearing device 10 to send a pairing request message via the interface 20 to the right ear hearing device 11, which, in turn, sends a pairing confirmation message via the interface 20 back to the left ear hearing device 10. The respective pairing information exchanged between the two hearing devices 10, 11 is stored in the memory 36 of the respective hearing device 10, 11.

Thereafter, the user may interact with the external device 40 in order to initiate pairing between the external device 40 and the left ear hearing device 10, whereupon the external device 40 transmits a corresponding pairing request message to the left ear hearing device 10 which, in turn, transmits a pairing confirmation message back to the external device 40 (typically, the device 10 may require, for security reasons, an additional user interaction with device 10 before confirming the pairing request in order prevent unwanted pairing). After successful pairing, the respective pairing information exchanged between the devices 40 and 10 is stored in the respective device 40,10.

Thereupon, the left ear hearing device 10 transmits a remote pairing request message to the right ear hearing device 11 which causes the right ear hearing device 11 to transmit a pairing request to the external device 40 which, in turn, sends back a pairing confirmation message to the right ear hearing device 11. After successful pairing, the pairing information exchanged between the right ear hearing device 11 and the external device 40 is stored in the devices 11 and 40, thereby finalizing the pairing procedure.

After termination of the pairing procedure, both the left ear hearing device 10 and the right ear hearing device 11 are paired with the external device 40, thereby completing setup of a communication network.

The user interaction step with the external device 40 is indicated at "A1" in Figs. 2 and 3, the pairing action between the left ear hearing device 10 and the external device 40 is indicated at "B1", the transmission of the remote pairing request is indicated at "C1", and the pairing action of the right ear hearing device 11 and the external device 40 is indicated at "D1"; further the user interaction with the left ear device 10 and the subsequent pairing between the devices 10 and 11 is indicated at "A0" in Fig. 2.

It is noted that the transmission of the remote pairing request message in step "C1" from the left ear device 10 to the right ear device also serves to transmit the information required by the right ear device 11 to initiate pairing with the external device 40 to the right ear device 11, for example the identity of the external device 40.

In case that one of the pairing steps "B1" or "D1" fails, the pairing action is retried until pairing is successful, or, if still no successful pairing is achieved, the pairing process is terminated and possibly existing partial pairing information on the left ear hearing device 10 is erased to ensure that either both or none of the hearing devices 10, 11 is paired with the external device 40.

According to a variant, the user may initiate pairing between the left ear hearing device 10 and external device 40 by interaction with the left ear hearing device 10, rather than with the external device 40, as indicated at "A'1" in Fig. 3.

According to a further variant, the pairing action "B1" between the left ear device 10 and the external device 40 may be carried out after the pairing action "D1" of the right ear device 11 and the external device 40.

According to a still further variant, the hearing assistance devices 10, 11 may be paired already at the manufacturer, so that the manual pairing action of step A0 can be omitted.

It is to be understood that in the example of Figs. 2 and 3, as well as in the other examples, of course the roles of the left ear device 10 and the right ear device 11 may be interchanged. Functionally, one of the hearing assistance devices may be considered as a "first device", whereas the other one may be considered as a "second device".

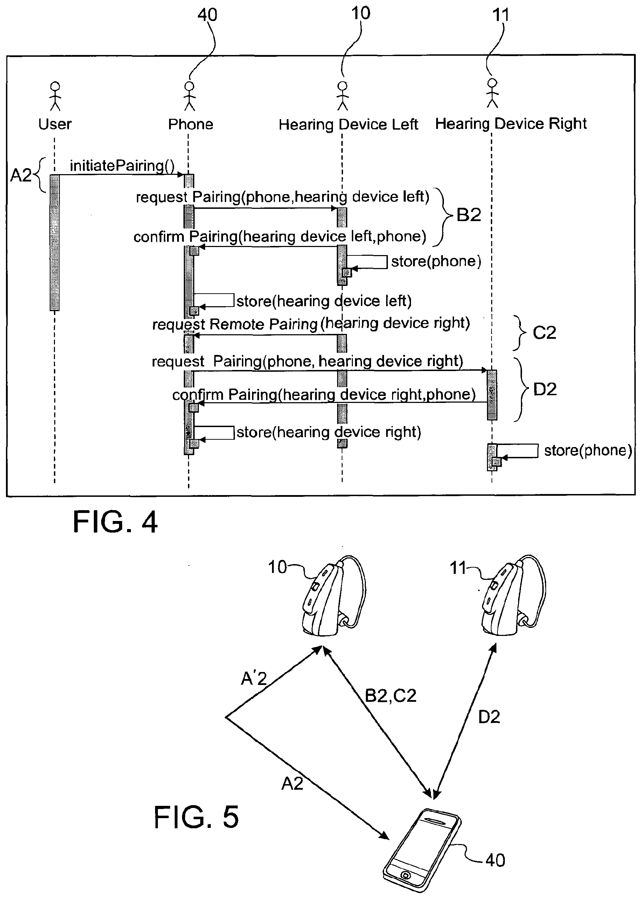

An example of a second embodiment of the invention is illustrated in Figs. 4 and 5, wherein, in contrast to the embodiment illustrated in Figs. 2 and 3, the left ear hearing device 10 transmits a remote pairing request message to the external device 40 rather than to the right ear hearing device 11, in order to make the external device 40 initiate pairing with the right ear hearing device 11.

In the sequence diagram of Fig. 4, the pairing action of the left ear device 10 and the right ear device 11 shown at the beginning of the sequence diagram of Fig. 2 (indicated at "A0") has been omitted, so that at the beginning of the sequence diagram of Fig, 4 the right ear device 11 and the left ear device 10 may have been already paired. However, since the embodiment of Fig. 2 does not require a binaural data exchange, the pairing between the left ear device 10 and the right ear device 11 may be omitted.

On the other hand, if the two hearing devices were paired, the left hearing device can provide information to the external device, to facilitate an authentication of the pairing request to the right hearing device. That is, the external device can prove with the information provided by the left hearing device to the external device that it is authorized by the left device to perform a pairing with the right device. Similar to the first embodiment, the end user may have to confirm the pairing on the left hearing device, whereupon the left hearing device provides this authorization information.

As in the example of Fig. 2, the user interacts with the external device 40 in order to pair the external device 40 and the left ear device 10 (as also indicated in Figs. 4 and 5 by steps "A2" and "B2"). However, in contrast to the example of Fig. 2, the left ear hearing device 10, upon successful pairing with the external device 40, transmits a remote pairing request message to the external device 40, rather than to the right ear device 11. The remote pairing request message causes the external device 40 to initiate pairing with the right ear device 11 by transmitting a pairing request message to the right ear hearing device 11 which, upon receipt of the pairing request message, sends a pairing confirmation message back to the external device 40. After successful pairing, the pairing information exchanged between the external device 40 and the right ear device 11 are stored in the external device 40 and the right ear device 11, respectively, thereby finalizing pairing of both the left ear device 10 and the right ear device 11 with the external device 40.

The transmission of the remote pairing request message to the external device 40 is indicated at "C2" in Figs. 4 and 5, and the pairing action between the right ear device 11 and the external device 40 is indicated at "D2".

Preferably, after successful pairing of the right ear device 11 with the external device 40, the right ear device 11, or alternatively the external device 40, transmits a pairing success notification message to the left ear device 10 in order to notify the left ear device 10 that the right ear device 11 has been successfully paired with the external device 40.

Preferably, if one of the pairing steps B2 and D2 fails, it is retried until successful pairing is achieved, or otherwise the pairing process is aborted, with any existing partial pairing information on the left ear device 11 or right ear device 10 being erased in order to ensure that either both or none of the hearing devices 10, 11 are paired with the external device 40.

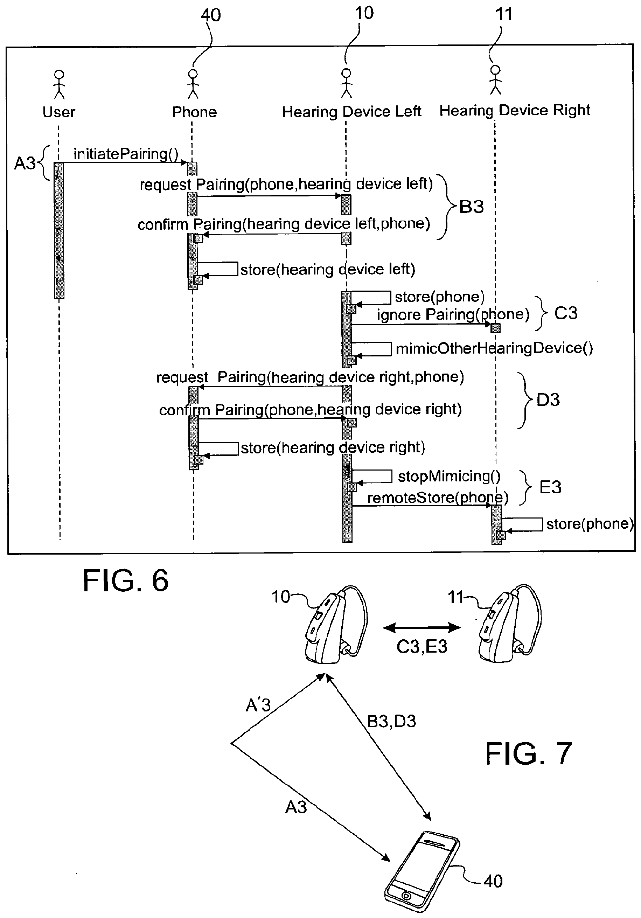

An example which is not covered by the invention is illustrated in Figs. 6 and 7, wherein one of the hearing assistance devices promotes pairing of the other hearing assistance device with the external device by presenting, in a pairing procedure with the external device, itself as the other hearing assistance device, rather than transmitting a pairing initialization command to the other hearing assistance device (as in the embodiment of Figs. 2 and 3) or to the external device (as in the embodiment of Figs. 4 and 5).

First, a binaural link is established between the left hearing device 10 and the right hearing device 11 (this step is not shown in the sequence diagram of Fig. 6), for example by pairing the devices 10, 11 as shown in Fig. 2 (step "A0" in Fig. 2), with the interfaces 20 being used for such binaural communication link. As next step, the user may interact with the external device 40 in order to initiate pairing of the external device 40 and the left ear device 10, with the external device 40 transmitting a pairing request message to the left ear device 10 and with the left ear device 10 sending back a pairing confirmation message to the external device 40 (as indicated at "B3" in Figs. 6 and 7). These pairing steps correspond to the pairing steps A1 and B1 of Fig. 2.

As a next step, the left ear device 10 transmits an "ignore pairing" request to the right ear device 11 via the binaural link, with such pairing disable command causing the right ear device 11 to disregard any subsequent pairing data and pairing commands received via the interface 20 (this step is indicated at "C3"). Such transmission of a pairing disable command by the left ear device 10 may be triggered by successful pairing of the left ear device 10 with the external device 40.

Thereafter, the left ear device 10 pairs with the external device 40 a second time, this time presenting itself, however, not as the left ear device 10 as in step B3, but as the right ear device 11 by using data required for pairing of the right ear device 11; the left ear device 10 may have received such pairing data of the right ear device 11 via the binaural link. Typically, this information is exchanged during the initial binaural pairing A0. Alternatively, the information could be exchanged at the time of the pairing with the external device 40 by using the binaural link.

Rather than using the network interfaces 20 for such pairing data exchange, a separate binaural wireless interface 18, as shown in Fig. 1, if present, may be used. According to a further alternative option, the pairing information may be exchanged via a wired interface, for example in a pairing configuration step during manufacturing of the hearing assistance devices 10, 11.

In order to initiate such pairing of the left ear device 10 presenting itself as the right ear device 11, the left ear device 10 transmits a pairing request message to the external device 40, using the right ear device data, with the external device 40 sending back a pairing confirmation message to the left ear device 10 (see step "D3").

In order to complete pairing of the right ear device 11 with the external device 40, the left ear device 10 transmits the data resulting from pairing with the external device 40, i.e. the pairing data established during the pairing procedure of the left ear device 10 when presenting itself as the right ear device 11 to the external device 40, to the right ear device 11 (see step "E4").

After having finalized step E3, both hearing assistance devices 10, 11 are paired with the external device 40.

The transmission of the pairing information of the external device 40 from the left ear device 10 the right ear device 11 (step E3) may be carried out using the protocol which is also used for the data exchange with the external device 40; alternatively, a proprietary link may be used. The transmission of the pairing data may be secured against eavesdropping.

Preferably, the right ear device 11, after successful pairing with the external device 40, transmits a pairing success notification message to the left ear device 10 in order to notify the left ear device 10 that the right ear device 11 has been successfully paired with the external device 40.

Preferably, if one of the pairing steps B3 and D3 fails, it is retried until successful pairing is achieved, or otherwise the pairing process is aborted, with any existing partial pairing information on the left ear device 11 being erased in order to ensure that either both or none of the hearing devices 10, 11 are paired with the external device 40.

It is to be understood that, as an alternative, the pairing between the left ear device 10 and the external device 40 (cf. step B3) may be carried out after step D3 wherein the left ear device 10, presenting itself as the right ear device 11, pairs with the external device 40.

As mentioned above, the right ear device 11 enters an "ignore pairing" mode by receiving an ignore pairing request from the left ear device 10. It may exit such "ignore pairing" mode in different ways.

For example, the message communicating the pairing data resulting from the pairing of the left ear device 10, when presenting itself as the right ear device 11, with the external device 40, to the right ear device 11, may trigger the exit from the "ignore pairing" mode.

Alternatively, the above mentioned explicit pairing success notification message received from the left ear device 10 exchange may cause the right ear device 11 to exit the "ignore pairing" mode.

According to a further alternative, the right ear device 11 may exit the "ignore pairing" mode after elapse of a certain time, i.e. in a timer-based manner.

Generally, the described pairing principles may be applied not only to binaural systems with two hearing assistance devices, but also to systems comprising more than two hearing assistance devices. In such case, the described pairing principles may be applied repeatedly to different ones of the plurality of hearing assistance devices to be paired, i.e. different ones of the plurality of hearing assistance devices subsequently may take the role of the second hearing assistance device is which paired with the external device with the help of the first hearing assistance device (for example, the role of the first hearing assistance device may be always taken by the same device). Such option of pairing more than two hearing assistance devices with an external device is particularly interesting in case that the hearing assistance devices are wireless loudspeakers.

## Claims

1. A method of establishing a wireless network comprising a first hearing assistance device (10), a second hearing assistance device (11), and an external device (40), each device comprising a wireless network interface (20), the method comprising:
establishing a communication link (30) between the first and second hearing assistance device,
transmitting a remote pairing command from the first to the second hearing assistance device via the communication link, the remote pairing command being adapted to cause the second hearing assistance device to initiate pairing with the external device,
pairing the second hearing assistance device and the external device upon an initiate pairing request transmitted by the second hearing assistance device,
pairing, before or after the pairing of the second hearing assistance device and the external device, the first hearing assistance device and the external device.

2. The method of claim 1, wherein the first hearing assistance device (10) and the second hearing assistance device (11) are paired by interaction of a user with at least one of the first hearing assistance device and the second hearing assistance device, and wherein the communication link between the first hearing assistance device and the second hearing assistance device is established via the network interfaces (20) after pairing of the first hearing assistance device and the second hearing assistance device.

3. A method of establishing a wireless network comprising a first hearing assistance device (10), a second hearing assistance device (11), and an external device (40), each device comprising a wireless network interface (20), the method comprising:
pairing the first hearing assistance device and the external device,
transmitting, via the wireless network interface, a remote pairing command from the first hearing assistance device to the external device, the remote pairing command being adapted to cause the external device to initiate pairing with the second hearing assistance device, and
pairing the second hearing assistance device and the external device upon an initiate pairing request transmitted by the external device.

4. The method of claim 3, wherein the second hearing assistance device (11) or the external device (40) transmits a pairing success notification message to the first hearing assistance device (10) in order to notify the first hearing assistance device that the second hearing assistance device has successfully paired with the external device.

5. The method of one of the preceding claims, wherein the pairing of the first hearing assistance device (10) and the external device (40) is initiated by a user of the first and second hearing assistance devices (11) interacting with the external device or with the first hearing assistance device.

6. The method of one of the preceding claims, wherein the wireless network interfaces (20) are Bluetooth-interfaces, and wherein the first and second hearing assistance devices (10, 11) are ear level devices forming a binaural hearing system, and wherein the first and second hearing assistance devices (10, 11) are hearing aids or wireless headphones.

7. The method of one of the preceding claims, wherein the external device (40) is an audio source for providing an audio stream to the hearing assistance devices, a mobile phone, a landline phone, an internet phone device, a TV-set, a personal computer, a tablet computer, a radio device, a media player, a wireless microphone, a hearing assistance device remote control or an audio streamer device.

8. A hearing assistance system comprising a first hearing assistance device (10) and a second hearing assistance device (11) to be worn by a user and an external device (40), each device comprising a wireless network interface (20) and being adapted to establish a wireless network via the wireless network interfaces,
the first and second hearing assistance device being adapted to establish a communication link (30) between the first and second hearing assistance device,
the first hearing assistance device being adapted to transmit a remote pairing command from the first to the second hearing assistance device via the communication link, the remote pairing command being adapted to cause the second hearing assistance device to initiate pairing with the external device,
the second hearing assistance device and the external device being adapted to pair upon an initiate pairing request transmitted by the second hearing assistance device, and
the first hearing assistance device and the external device being adapted to pair, before or after the pairing of the second hearing assistance device and the external device, upon user interaction.

9. A hearing assistance system comprising a first hearing assistance device (10) and a second hearing assistance device (11) to be worn by a user, and an external device (40), each device comprising a wireless network interface (20) and being adapted to establish a wireless network via the wireless network interfaces,
the first hearing assistance device and the external device being adapted to be paired by user interaction,
the first hearing assistance device being adapted to transmit, via the wireless network interface, a remote pairing command to the external device, the remote pairing command being adapted to cause the external device to initiate pairing with the second hearing assistance device, and
the external device being adapted to transmit an initiate pairing request to the second hearing assistance device in order to be paired with the second hearing assistance device.

10. The system of claim 8, wherein the network interfaces of the first and second hearing assistance devices (10, 11) are adapted to establish the wireless communication link (30) between the first hearing assistance device and the second hearing assistance device, or wherein the first hearing assistance device (10) and the second hearing assistance device (11) each comprise an additional wireless interface (18) for establishing the wireless communication link (30) between the first hearing assistance device and the second hearing assistance device.

## Patentansprüche

1. Verfahren zum Aufbauen eines drahtlosen Netzwerkes mit einem ersten Hörunterstützungsgerät (10), einem zweiten Hörunterstützungsgerät (11) sowie einem externen Gerät (40), wobei jedes Gerät eine drahtlose Netzwerkschnittstelle (20) aufweist, wobei im Zuge des Verfahrens:
eine Kommunikationsverbindung (30) zwischen dem ersten und dem zweiten Hörunterstützungsgerät aufgebaut wird,
ein Fernkopplungsbefehl über die Kommunikationsverbindung von dem ersten zu dem zweiten Hörunterstützungsgerät gesendet wird, welcher geeignet ist, um das zweite Hörunterstützungsgerät zu veranlassen, eine Kopplung mit dem externen Gerät zu initiieren,
das zweite Hörunterstützungsgerät und das externe Gerät auf einen Kopplungsinitiierungsantrag hin, der von dem zweiten Hörunterstützungsgerät gesendet wird, miteinander gekoppelt werden,
vor oder nach dem Koppeln des zweiten Hörunterstützungsgeräts und des externen Geräts das erste Hörunterstützungsgerät und das externe Gerät miteinander gekoppelt werden.

2. Verfahren gemäß Anspruch 1, wobei das erste Hörunterstützungsgerät (10) und das zweite Hörunterstützungsgerät (11) mittels Interaktion eines Nutzers mit dem ersten Hörunterstützungsgerät und/oder dem zweiten Hörunterstützungsgerät gekoppelt werden, und wobei die Kommunikationsverbindung zwischen dem ersten Hörunterstützungsgerät und dem zweiten Hörunterstützungsgerät über die Netzwerkschnittstellen (20) nach dem Koppeln des ersten Hörunterstützungsgeräts und des zweiten Hörunterstützungsgeräts aufgebaut wird.

3. Verfahren zum Aufbauen eines drahtlosen Netzwerks mit einem ersten Hörunterstützungsgerät (10), einem zweiten Hörunterstützungsgerät (11) und einem externen Gerät (40), wobei jedes Gerät eine drahtlose Netzwerkschnittstelle (20) aufweist, wobei im Zuge des Verfahrens:
das erste Hörunterstützungsgerät und das externe Gerät gekoppelt werden,
über die drahtlose Netzwerkschnittstelle ein Fernkopplungsbefehl von dem ersten Hörunterstützungsgerät zu dem externen Gerät gesendet wird, welcher geeignet ist, um das externe Gerät zu veranlassen, eine Kopplung mit dem zweiten Hörunterstützungsgerät zu initiieren, und
das zweite Hörunterstützungsgerät und das externe Gerät auf einen von dem externen Gerät gesendeten Kopplungsinitiierungsantrag hin gekoppelt werden.

4. Verfahren gemäß Anspruch 3, wobei das zweite Hörunterstützungsgerät (11) oder das externe Gerät (40) eine Kopplungserfolgsanzeigenachricht zu dem ersten Hörunterstützungsgerät (10) sendet, um das erste Hörunterstützungsgerät davon zu benachrichtigen, dass das zweite Hörunterstützungsgerät erfolgreich mit dem externen Gerät gekoppelt wurde.

5. Verfahren gemäß einem der vorhergehenden Ansprüche, wobei das Koppeln des ersten Hörunterstützungsgeräts (10) und des externen Geräts (40) dadurch initiiert wird, dass ein Nutzer des ersten und zweiten Hörunterstützungsgeräts (11) mit dem externen Gerät oder mit dem ersten Hörunterstützungsgerät interagiert.

6. Verfahren gemäß einem der vorhergehenden Ansprüche, wobei es sich bei den drahtlosen Netzwerkschnittstellen (20) um Bluetooth-Schnittstellen handelt, und wobei es sich bei dem ersten und zweiten Hörunterstützungsgerät (10, 11) um Ohrniveaugeräte handelt, die ein binaurales Hörsystem bilden, und wobei es sich bei dem ersten und zweiten Hörunterstützungsgerät (10, 11) um Hörgeräte oder drahtlose Kopfhörer handelt.

7. Verfahren gemäß einem der vorhergehenden Ansprüche, wobei es sich bei dem externen Gerät (40) um eine Audioquelle zum Bereitstellen eines Audiostroms für die Hörunterstützungsgeräte, ein Mobiltelefon, ein Festnetztelefon, ein Internettelefongerät, ein TV-Set, einen PC, einen Tablet-Computer, ein Radiogerät, ein Medienabspielgerät, ein drahtloses Mikrofon, eine Fernbedienung für ein Hörunterstützungsgerät oder ein Audio-Streaming-Gerät handelt.

8. Hörunterstützungssystem mit einem ersten Hörunterstützungsgerät (10) und einem zweiten Hörunterstützungsgerät (11), die von einem Nutzer zu tragen sind, sowie einem externen Gerät (40), wobei jedes Gerät eine drahtlose Netzwerkschnittstelle (20) aufweist und ausgebildet ist, um ein drahtloses Netzwerk über die drahtlosen Netzwerkschnittstellen aufzubauen,
wobei das erste und zweite Hörunterstützungsgerät ausgebildet sind, um eine Kommunikationsverbindung (30) zwischen dem ersten und dem zweiten Hörunterstützungsgerät auszubilden,
wobei das erste Hörunterstützungsgerät ausgebildet ist, um einen Fernkopplungsbefehl von dem ersten zu dem zweiten Hörunterstützungsgerät über die Kommunikationsverbindung zu senden, welcher geeignet ist, um das zweite Hörunterstützungsgerät zu veranlassen, eine Kopplung mit dem externen Gerät zu initiieren,
wobei das zweite Hörunterstützungsgerät und das externe Gerät ausgebildet sind, um auf einen von dem zweiten Hörunterstützungsgerät gesendeten Kopplungsinitiierungsantrag hin miteinander zu koppeln, und
wobei das erste Hörunterstützungsgerät und das externe Gerät ausgebildet sind, um vor oder nach dem Koppeln des zweiten Hörunterstützungsgeräts und des externen Geräts auf eine Nutzerinteraktion hin miteinander zu koppeln.

9. Hörunterstützungssystem mit einem ersten Hörunterstützungsgerät (10) und einem zweiten Hörunterstützungsgerät (11), die von einem Nutzer zu tragen sind, sowie einem externen Gerät (40), wobei jedes Gerät eine drahtlose Netzwerkschnittstelle (20) aufweist und ausgebildet ist, um über die drahtlosen Netzwerkschnittstellen ein drahtloses Netzwerk aufzubauen,
wobei das erste Hörunterstützungsgerät und das externe Gerät ausgebildet sind, um mittels Nutzerinteraktion miteinander gekoppelt zu werden,
wobei das erste Hörunterstützungsgerät ausgebildet ist, um über die drahtlose Netzwerkschnittstelle einen Fernkopplungsbefehl zu dem externen Gerät zu senden, der geeignet ist, um das externe Gerät zu veranlassen, ein Koppeln mit dem zweiten Hörunterstützungsgerät zu initiieren, und
wobei das externe Gerät ausgebildet ist, um einen Kopplungsinitiierungsantrag zu dem zweiten Hörunterstützungsgerät zu senden, um mit dem zweiten Hörunterstützungsgerät gekoppelt zu werden.

10. System gemäß Anspruch 8, wobei die Netzwerkschnittstellen des ersten und zweiten Hörunterstützungsgeräts (10, 11) ausgebildet sind, um die drahtlose Kommunikationsverbindung (30) zwischen dem ersten Hörunterstützungsgerät und dem zweiten Hörunterstützungsgerät aufzubauen, oder wobei das erste Hörunterstützungsgerät (10) und das zweite Hörunterstützungsgerät (11) jeweils eine zusätzliche drahtlose Schnittstelle (18) zum Aufbauen der drahtlosen Kommunikationsverbindung (30) zwischen dem ersten Hörunterstützungsgerät und dem zweiten Hörunterstützungsgerät aufweisen.

## Revendications

1. Procédé d'établissement d'un réseau sans fil comprenant un premier dispositif d'aide auditive (10), un second dispositif d'aide auditive (11) et un dispositif externe (40), chaque dispositif comprenant une interface réseau sans fil (20), le procédé comprenant :
l'établissement d'une liaison de communication (30) entre les premier et second dispositifs d'aide auditive,
la transmission d'une commande d'appariement à distance depuis le premier vers le second dispositif d'aide auditive par l'intermédiaire de la liaison de communication, la commande d'appariement à distance étant conçue pour amener le second dispositif d'aide auditive à amorcer un appariement avec le dispositif externe,
l'appariement du second dispositif d'aide auditive et du dispositif externe lors d'une requête d'amorce d'appariement transmise par le second dispositif d'aide auditive,
l'appariement, avant ou après l'appariement du second dispositif d'aide auditive et du dispositif externe, du premier dispositif d'aide auditive et du dispositif externe.

2. Procédé selon la revendication 1, dans lequel le premier dispositif d'aide auditive (10) et le second dispositif d'aide auditive (11) sont appariés par une interaction d'un utilisateur avec au moins un parmi le premier dispositif d'aide auditive et le second dispositif d'aide auditive, et dans lequel la liaison de communication entre le premier dispositif d'aide auditive et le second dispositif d'aide auditive est établie par l'intermédiaire des interfaces réseau (20) après l'appariement du premier dispositif d'aide auditive et du second dispositif d'aide auditive.

3. Procédé d'établissement d'un réseau sans fil comprenant un premier dispositif d'aide auditive (10), un second dispositif d'aide auditive (11) et un dispositif externe (40), chaque dispositif comprenant une interface réseau sans fil (20), le procédé comprenant :
l'appariement du premier dispositif d'aide auditive et du dispositif externe,
la transmission, par l'intermédiaire de l'interface réseau sans fil, d'une commande d'appariement à distance depuis le premier dispositif d'aide auditive vers le dispositif externe, la commande d'appariement à distance étant conçue pour amener le dispositif externe à amorcer un appariement avec le second dispositif d'aide auditive, et
l'appariement du second dispositif d'aide auditive et du dispositif externe lors d'une requête d'amorce d'appariement transmise par le dispositif externe.

4. Procédé selon la revendication 3, dans lequel le second dispositif d'aide auditive (11) ou le dispositif externe (40) transmet un message de notification de réussite d'appariement au premier dispositif d'aide auditive (10) dans le but de notifier au premier dispositif d'aide auditive que le second dispositif d'aide auditive s'est apparié avec succès au dispositif externe.

5. Procédé selon l'une des revendications précédentes, dans lequel l'appariement du premier dispositif d'aide auditive (10) et du dispositif externe (40) est amorcé par un utilisateur des premier et second dispositifs d'aide auditive (11) interagissant avec le dispositif externe ou avec le premier dispositif d'aide auditive.

6. Procédé selon l'une des revendications précédentes, dans lequel les interfaces réseau sans fil (20) sont des interfaces Bluetooth, et dans lequel les premier et second dispositifs d'aide auditive (10, 11) sont des dispositifs auditifs formant un système auditif binaural, et dans lequel les premier et second dispositifs d'aide auditive (10, 11) sont des appareils auditifs ou des écouteurs sans fil.

7. Procédé selon l'une des revendications précédentes, dans lequel le dispositif externe (40) est une source audio pour fournir un flux audio aux dispositifs d'aide auditive, un téléphone mobile, un téléphone filaire, un dispositif de téléphone par Internet, un téléviseur, un ordinateur personnel, une tablette, une radio, un lecteur multimédia, un microphone sans fil, une télécommande de dispositif d'aide auditive ou un lecteur audio en continu.

8. Système d'aide auditive comprenant un premier dispositif d'aide auditive (10) et un second dispositif d'aide auditive (11) devant être portés par un utilisateur et un dispositif externe (40), chaque dispositif comprenant une interface réseau sans fil (20) et étant conçu pour établir un réseau sans fil par l'intermédiaire des interfaces réseau sans fil,
les premier et second dispositifs d'aide auditive étant conçus pour établir une liaison de communication (30) entre les premier et second dispositifs d'aide auditive, le premier dispositif d'aide auditive étant conçu pour transmettre une commande d'appariement à distance depuis le premier vers le second dispositif d'aide auditive par l'intermédiaire de la liaison de communication, la commande d'appariement à distance étant conçue pour amener le second dispositif d'aide auditive à amorcer un appariement avec le dispositif externe,
le second dispositif d'aide auditive et le dispositif externe étant conçus pour s'apparier lors d'une requête d'amorce d'appariement transmise par le second dispositif d'aide auditive, et
le premier dispositif d'aide auditive et le dispositif externe étant conçus pour s'apparier, avant ou après l'appariement du second dispositif d'aide auditive et du dispositif externe, lors d'une interaction de l'utilisateur.

9. Système d'aide auditive comprenant un premier dispositif d'aide auditive (10) et un second dispositif d'aide auditive (11) devant être portés par un utilisateur, et un dispositif externe (40), chaque dispositif comprenant une interface réseau sans fil (20) et étant conçu pour établir un réseau sans fil par l'intermédiaire des interfaces réseau sans fil,
le premier dispositif d'aide auditive et le dispositif externe étant conçus pour être appariés par une interaction de l'utilisateur,
le premier dispositif d'aide auditive étant conçu pour transmettre, par l'intermédiaire de l'interface réseau sans fil, une commande d'appariement à distance vers le dispositif externe, la commande d'appariement à distance étant conçue pour amener le dispositif externe à amorcer un appariement avec le second dispositif d'aide auditive, et
le dispositif externe étant conçu pour transmettre une requête d'amorce d'appariement au second dispositif d'aide auditive dans le but d'être apparié au second dispositif d'aide auditive.

10. Système selon la revendication 8, dans lequel les interfaces réseau des premier et second dispositifs d'aide auditive (10, 11) sont conçues pour établir la liaison de communication sans fil (30) entre le premier dispositif d'aide auditive et le second dispositif d'aide auditive, ou dans lequel le premier dispositif d'aide auditive (10) et le second dispositif d'aide auditive (11) comprennent chacun une interface sans fil supplémentaire (18) pour établir la liaison de communication sans fil (30) entre le premier dispositif d'aide auditive et le second dispositif d'aide auditive.
